# EUROPEAN PATENT APPLICATION

(11) **EP 2 336 201 A1**
(43) Date of publication of application: **22.06.2011**
(21) Application number: 10195303.2
(22) Date of filing: 16.12.2010
(51) Int. Cl.: C08F 10/00, C08F 2/00

(54) **Polyolefin manufacturing process**

(30) Priority: 17.12.2009 US 653776
(71) Applicant: Ineos USA, LLC, Lisle, IL 60532 (US)
(72) Inventor: Gessner, Mark, Houston, TX 77054 (US); Rahim, Waseem, League City, TX 77573-4406 (US)
(74) Representative: Rickard, Timothy Mark Adrian

(57) **Abstract**

The invention relates to an improved process for manufacturing an olefin polymer composition, in particular polyethylene, that incorporates two elongated tubular closed loop reaction zones (or the so-called "slurry loop" polymerization reactors) and a solids-concentrator in between the two reaction zones, that is optimally controlled to achieve the desired reactor and downstream solid concentrations required to make a range of polymer compositions including "bimodal" polymers where between-reactor hydrogen separation is important. The invention also relates to a plant used for carrying out the process.

## Description

### Background of the Invention

The invention relates to an improved process for manufacturing an olefin polymer composition, in particular polyethylene, that incorporates two elongated tubular closed loop reaction zones (or the so-called "slurry loop" polymerization reactors) with a solids-concentration apparatus in between the two reaction zones that is optimally controlled to achieve the desired reactor and downstream solid concentrations.

### Description of the Prior Art

The general use of two reactors in series to manufacture an olefin polymer composition is described in prior art and further advanced by U.S. Patent No. 6,586,537, the disclosure of which is incorporated herein by reference in its entirety. In the '537 patent, a process is described that is suitable for production of olefinic polymer grades including ethylene polymer compositions comprising a polymer (A) and a polymer (B) having differing comonomer content and differing molecular mass. Such polymer grades are referred to in the industry as "bimodal" or "multi-modal" grades. The use of two reactors in series to produce bimodal PE grades and their specific advantages are disclosed in U.S. Patent No. 6,225,421 (Solvay Polyolefins), the disclosure of which is incorporated herein by reference. The use of an intermediate-pressure light-gas removal system between two reaction zones that makes use of a fractionator is disclosed in WO 2006/015807, the disclosure of which is incorporated herein by reference.

Although the general process described by the '537 patent discloses the use of a hydrocyclone separator, it fails to disclose a method of using such a concentrator device to control solids concentrations either inside the reactor or downstream of the hydrocyclone. Instead, the '537 patent merely uses the hydrocyclone to boost the concentration of solids in the polymer suspension being sent from one reaction zone to the next.

Desirably, a process would exist that would provide for precise control of solids levels in the polymer suspensions being sent from one reaction zone to the next such that polymers having precise monomer ratios could be easily manufactured. Further, it would be desirable to have a process that would allow for the production of a variety of polymers having different monomer concentrations on the same reactor apparatus. Precise solids control is essential both to control the productivity in the first reactor as well as to optimize the subsequent H₂ removal required for bimodal production. Further, precise solids control reduces plugging within the reactor, thus reducing downtime for clean out.

The present invention provides an optimized process which can be used for the manufacture of bimodal or monomodal grades using a wide range of Ziegler or chromium catalysts that overcomes the drawbacks of the prior art systems.

### Summary of the Invention

The present invention relates to a process for manufacturing an olefin polymer composition in at least two elongated tubular closed loop reaction zones (i.e. slurry loop reactors) that are configured in series. According to the process of the invention, a solids-concentration apparatus is provided in between the two reaction zones. The solids-concentration apparatus is optimally controlled to achieve the desired reactor and downstream solid concentrations required to make a range of polymer compositions including "bimodal resins" where between-reactor hydrogen separation is important.

### Brief Description of the Drawings

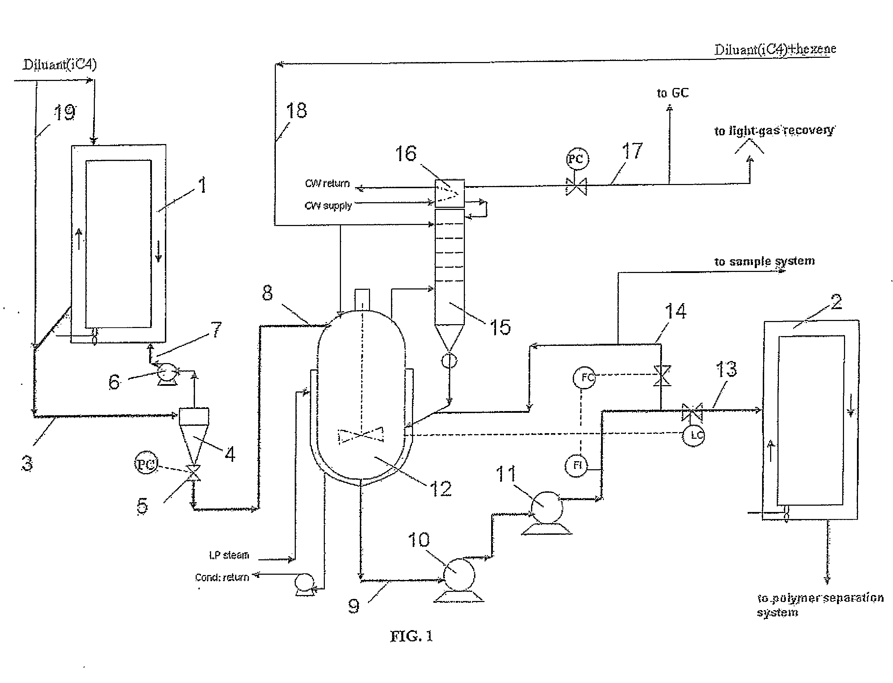

Figure 1 is a schematic showing the first reaction and second reactor zones, and the between reactor solids concentrator and light-gas removal systems.

### Detailed Description of the Preferred Embodiments

According to the process of the invention, at least one olefin, e.g., ethylene, is continuously polymerized in a first reaction zone or reactor in the presence of a diluent (D), and a catalyst in order to produce a slurry or suspension (S) comprising the diluent (D) and solid particles of olefin polymer, e.g., polyethylene circulating in the reaction zone. According to a preferred embodiment of the invention, the slurry (S) is diluted to a solids concentration that is at least 0.1 weight percent lower than the second stream to create a diluted slurry. In a "bimodal" process according to the invention, a low molecular weight material is made in the first reaction zone and hydrogen is generally used to control molecular weight. This "first block" material is typically a homopolymer or near homopolymer.

Next, part of the circulating polymer slurry/suspension (S) is drawn off, preferably on a continuous basis, from the reactor and is sent to a concentrator, preferably a hydrocyclone, in which, on the one hand, a first polymer lean stream (F) comprising diluent (D) and fine particles of catalyst and a second stream comprising a concentrated suspension (CS) of particles of polymer (A) are formed and separated.

Preferably, about 1% up to about 20% of the circulating slurry in the first reaction zone is withdrawn and sent to the concentrator. More preferably, about 1% up to about 5% of the circulating slurry in the first reaction zone is withdrawn and sent to the concentrator.

The polymer suspension (S) may be withdrawn from any location of the reactor loop by any known means such as continuously or via settling legs or a combination of the continuous and discontinuous withdrawal. It is preferred that the withdrawal is taken from a location in the loop where the reaction slurry is most concentrated, for example from the outside of an upturning bend of lower horizontal section of the loop. Alternatively the withdrawal may be taken from a location of the loop that is representative of the average solids concentration in the loop such as from a vertical, preferably upward flowing, section more than 10 to 20 pipe diameters downstream of a bend or obstacle. The withdrawal is preferably taken from a location upstream of reagent (e.g., monomer) and catalyst feeds.

The first stream (F) is drawn off and recycled to the first polymerization reactor under a controlled flow equal to at least 0.4 times, preferably at least 0.8 times, and most preferably greater than 1.0 times the total flow of the second stream (CS). The flow of stream (F) may be varied to control the average weight percent solids concentration of the polymer suspension (S) inside the first polymerization reactor while maintaining a higher solids concentration in the second stream (CS). The solids concentration of stream CS is preferably maintained at 5 to 30 weight percent (wgt%) above, more preferably at 15 to 30 wgt % above, and most preferably 20 wgt% above that of stream S.

The ratio Qf (flowrate of the stream F) to Qcs (flowrate of the stream CS) may be adjusted to optimize the concentration of the slurry in stream CS and/or the productivity of the reactor. Preferably, the ratio Qf to Qcs is adjusted to maintain catalyst productivity inside the first polymerization zone at a level at least 10% greater than when the concentrator vessel is bypassed. More preferably, the productivity of the reactor is at least 10,000 kg (pounds) of olefin polymer per kg (pound) of catalyst provided. The productivity of the reactor will be influenced by the quantity of unreacted catalyst that is returned to the reactor in stream F. The stream S is preferably withdrawn downstream of the reactor loop pump and the stream F returned upstream of the loop pump to use the pump pressure differential to drive the slurry flow. It is preferred that either stream S or stream F is pumped to provide additional control of the recycled slurry flow and to provide additional energy for the solids concentration step.

In a preferred embodiment of the process, the stream F leaving the concentrator is pumped back into the first reaction zone by means of an open-impeller centrifugal pump. This return flow is controlled by changing of the speed of the pump. In this manner the ratio of Qf to Qcs can be controlled.

According to the process of the invention, the concentrator enables a reactor comprising the first reaction zone to be operated at solids of 40 weight percent or lower in stream (S), while achieving significantly higher solids in stream (CS). Operation at low reactor solids allows the first reactor to be more stable, e.g., less plugging, resulting in higher overall reliability. For the preferred embodiment of the process suitable for "bimodal" production, the solids concentration of the withdrawn concentrated slurry stream (CS) leaving the concentrator is preferably >45 weight percent solids for best functioning of the downstream hydrogen removal equipment.

Optionally, the process of the invention may include a diluent flush tie-in to the line connecting the first reaction zone to the concentrator and a controlled flow of diluent is introduced between the first reaction zone and the concentrator, which lowers the concentration of unreacted monomer and hydrogen in the withdrawn stream, helping to unload the downstream equipment.

In one preferred embodiment, the concentrated slurry (CS) is introduced, optionally after heating using, for example, desuperheated steam in a conventional double-pipe slurry heater, to a light gas (e.g., H₂ and ethylene) removal system which consists of an agitated and steam-jacketed flash vessel operating at an intermediate pressure (>344kPa gauge and <2068kPa gauge) (>50 and <300 pound-force per square inch gauge (psig)) lower than that of the first reactor. It is preferred that a fractionation column, which includes an overhead condenser, is directly connected to the vapor side of the aforementioned flash vessel.

This preferred embodiment of the process improves the overall hydrogen and light gas removal efficiency by combining the effects of a solids concentrator, with the light-gas removal system. This process configuration, although designed for bimodal production, can also be used for monomodal production as well as it allows for between reactor sampling of gases and polymer that can be used for reactor quality control.

The steam jacket on the flash vessel functions similarly to a tubular reboiler as it provides heat at the bottom of the fractionation column, but with the advantage of a stirred tank to collect the solids. Vapor moves up the tower and most of the diluent and also any heavy comonomer, e.g. hexene, is condensed by an overhead condenser and falls as a liquid along with any scrubbed PE fines down to the flash vessel. The concentration of solids in the flash vessel is typically controlled at around 45 to 50 wgt% solids by addition of recycle diluent. The process is able to use recycle diluent that contains heavy comonomer, e.g. isobutane containing hexene, (versus pure diluent, e.g. pure isobutane) which reduces the demand of pure diluent.

In the overhead condenser, overhead vapors, free of polymer fines due to the scrubbing action of the liquid diluent stream moving down the column, are removed from the overhead of the columns and sent on to a recycle system for recovery, or for on-line analysis. The concentrated suspension (CS') with lowered concentrations of light gases in the liquid phase is then pumped, using a centrifugal pump, preferably a series of open-impeller centrifugal pumps, from the bottom of the intermediate-pressure flash vessel. The total flow through the centrifugal pumps is controlled via the use of a recirculation line and where the total head pressure produced by the series of at least two pumps is at least 250 psi.. Stream CS' typically has a slurry concentration of between 30wgt% and 60wgt%, preferably between 40 and 50wgt%, and a hydrogen concentration less than 0.008 wgt%.

The use of the fractionation column reduces the concentration of components in the polymer slurry having a molecular weight less than 30 daltons (commonly referred to as "light gases"). Further, the concentration of hydrogen in the concentrated suspension (CS') stream is reduced by from about 80 to about 99 weight percent of the concentration of hydrogen in the slurry withdrawn from the first reaction zone.

In addition the scrubbing action of the column removes small polymer particles (or fines) that are carried with the overhead gases. Overhead gases directly leaving the fractionation column contain less than 0.01% by weight polymer particles or fines.

According to the process of the invention, the second concentrated suspension stream has a solids concentration of between 30 weight percent to about 65 weight percent, most preferably between 50 weight percent to about 60 weight percent.

In one optional preferred embodiment of the process, the overhead condenser is a spiral-flow condenser that is directly attached to the top of the scrubber tower. Compared to the prior art, the use of a directly connected spiral flow condenser simplifies the return of the liquid reflux to the top of the column and minimizes potential surging in the column (versus a standard shell-and-tube overhead condenser).

Preferably, from about five (5) to about fifty (50) percent by volume of the concentrated suspension (CS') stream is recirculated back to the slurry within the flash vessel which can provide further agitation in the vessel, and optionally a portion of the recirculated suspension can be removed to be treated so as to separate out a sample of the solid polymer particles for quality control analysis. More preferably, from about 10 to about 40 percent by volume of the concentrated suspension (CS') stream is recirculated back to the slurry within the flash vessel. The part of the (CS') stream not recirculated above is sent on to a second polymerization reactor in which at least one olefin is polymerized in order to form an olefin polymer (B) and to produce a suspension (S') comprising the diluent (D) and particles of an olefin polymer composition comprising polymer (A) and polymer (B). In an alternative embodiment, all of the concentrated suspension of particles of polymer are fed to a second polymerization zone. Preferably, the solids content of the polymer suspension inside the second polymerization zone is greater than the solids content of the polymer slurry (S) inside the first polymerization zone. More preferably, the solids content of the polymer suspension inside the second polymerization zone is at least 10 wgt.% percent greater than the solids content of the polymer slurry (S) inside the first polymerization zone.

The process of the invention may further comprise the step of adding a second concentrated polymer suspension (CS") having a solids concentration from about 30 weight percent to about 60 weight percent to the second polymerization reactor zone to produce an olefin polymer suspension having particles from both polymer suspensions.

For the optional use of the process to produce "bimodal" resins as disclosed in U.S. Patent No. 6,225,421, a high molecular weight block is added in the 2^{nd} polymerization reactor, and hydrogen is added at very low levels to control the molecular weight.

As in the case of the upstream reactor, the polymer suspension (S') may be withdrawn from the second polymerization reactor using any known technique. The withdrawn stream is then subsequently treated so as to separate the polymer product from the unreacted monomers and diluent.

The term "olefin polymers" as used herein includes both the homopolymers of an olefin and the copolymers of an olefin, with one or more other olefins (or monomers) able to be copolymerized with the olefin. Preferred olefins may be selected from the group of 1-olefins comprising from 2 to 12 carbon atoms include ethylene, propylene, butene, hexene and octene.

The process according to the invention is applicable to the production of an olefin polymer, and more especially to the production of an ethylene polymer composition. It is very suitable for obtaining an ethylene polymer composition comprising a polymer (A) and a polymer (B) having a different comonomer content and a different molecular mass (i.e. "bimodal" grades), but also suitable for grades that have nearly identical comonomer content and molecular mass in all polymerization zones (i.e. "monomodal" grades).

The diluent (D) may be any diluent that is liquid under the polymerization conditions and in which most of the polymer formed is insoluble under those conditions. The diluent is preferably an acyclic aliphatic hydrocarbon containing from 3 to 8 carbon atoms, and in particular may be selected from the group comprising propane, isobutane, pentane, and hexane.

In the polymerization step, it should be generally understood that, apart from one or more olefins and diluent, other compounds may be present, including cocatalysts (in particular alkyls) and other molecular weight control agents such as hydrogen. The cocatalyst may be selected from aluminum alkyls such as triethylaluminum or TEAL, triisobutylaluminum or TIBAL, ethylaluminum dichloride or EADC, and diethylaluminum chloride or DEAC.

In the polymerization step, any catalyst allowing olefins to polymerize may be used. These may include catalysts of the Zeigler type, catalysts based on chromium or vanadium, metallocene catalysts, as well as those catalysts based on transition metals.

The term "fractionation column" or "fractionator" refers to any fractionation device consisting of at least 2 stages and having an overhead condenser. The column internals are preferably 2 or more trays (more-preferably 4 or more) that are capable of handling some solids without plugging (preferably of the "dual-flow" type). Preferably, the overhead condenser is a spiral-flow condenser that is directly attached to the top of the fractionation column.

An optional embodiment of the process provides a hydrocyclone concentrator separator between the second reaction zone or reactor and downstream equipment. Similar to the process described for the first reactor, this serves to concentrate the solids further to unload downstream recycle equipment and to recirculate unreacted catalyst and "fines" back to the second reactor.

### Example 1

Production of a bimodal-grade polymer was carried out using the process described in the invention and the plant described in Figure 1. Ethylene was continuously polymerized in the first loop reactor 1 which was charged with isobutane, by means of a Ziegler-type catalyst so as to form a suspension comprising about 35% by weight of particles of an ethylene homopolymer. The temperature in the reactor 1 was about 96°C (205° F), and the pressure was about 3792kPa gauge (550 psig). The reactor 9 was fed continuously with ethylene at a rate of 1.26kgs⁻¹ (10 thousand pounds per hour (kpph)). Some of the suspension of polymer particles formed in the reactor 1 was continuously withdrawn via the line 3 at the rate of 6.42kgs⁻¹ (51 kpph). The reactor 1 was fed isobutane diluent at a total rate of 1.0kgs⁻¹ (8 kpph). A small part of this recycled isobutane diluent flow (0.126kgs⁻¹ (1 kpph)) supplied via line 19 is combined with the polymer suspension leaving reactor 1. The suspension thus slightly diluted comprised approximately 34% by weight of polymer particles and was sent continuously to the hydrocyclone separator 4. The operation of the hydrocyclone separator was controlled by means of the pump 6 speed control and the control valve 5 so as to obtain a stream (F) leaving the hydrocyclone and returning to the reactor 1 via the line 7 at the rate of 4.0kgs⁻¹ (32 kpph), and a concentrated suspension (CS) leaving the hydrocyclone via the line 8 at a rate of 2.3kgs⁻¹ (18 kpph). The stream (F) returning to reactor 1 was comprised of about 18% by weight of polymer particles, and the liquid component flows were 3.3kgs⁻¹ (26 kpph) of isobutane, 34.2gs⁻¹ (272 pph) of ethylene, and 1gs⁻¹ (8.4 pph) of H₂. The suspension (CS) comprised of 56% by weight of polymer particles, and the liquid component flows were 1.0kgs⁻¹ (8 kpph) of isobutane, 15.8gs⁻¹ (126 pph) of ethylene, and 0.5gs⁻¹ (4.1 pph) of hydrogen. The suspension (CS) was sent through the letdown valve 5 via line 8 to the vessel 12 in which the pressure was about 965kPa gauge (140 psig). Isobutane diluent and hexene from the recycle system was introduced via the line 18 to vessel 12 at a flowrate of 0.25kgs⁻¹ (2 kpph). The resulting polymer suspension collected in the bottom of vessel 12 comprised about 50% by weight of polymer particles. The temperature of the polymer suspension collected in vessel 12 was about 69°C (157° F). The steam flow used in the jacket of vessel 12 was 0.157kgs⁻¹ (1200 pph). The light gases from the top of vessel 12 travelled up through the fractionation column 25 where the gases not condensed by the overhead condenser 16 were removed via line 17.

The temperature of the overhead gases was 33°C (92° F). The total concentration of H₂ remaining in the suspension collected in vessel 12 was 0.00058 wgt%. The flowrates of isobutane diluent and ethylene leaving with the overhead light gas stream were 37.7gs⁻¹ 299 pph and 13.6gs⁻¹ (108 pph), respectively.

The degassed suspension was pumped from vessel 12 via pumps 10 and 11 and part of this stream was returned to the vessel 12 via line 14, while the rest of the stream was introduced in the reactor 2 via line 13 at a flowrate of about 2.5kgs⁻¹ (20 kpph).

A stream of isobutane diluent and hexene was also added directly to the reactor 2 at a rate of 1.77kgs⁻¹ (14 kpph). The temperature and pressure conditions in reactor 2 were 85°C (185° F) and 2930kPa gauge (425 psig), respectively. The hexene concentration in the reactor 2 was approximately 5.8% by weight. Some of the suspension of particles of the polymer composition was withdrawn from the reactor 2 at a total flow rate of 5.5kgs⁻¹ (44 kpph), and this suspension comprised about 45% by weight of particles of a polymer composition comprising an ethylene homopolymer and an ethylene/hexene copolymer. The total polymer flowrate was about 2.5kgs⁻¹ (20 kpph).

The withdrawn suspension was sent on to a polymer separation process where the polymer stream was separated from the diluent and unreacted monomers which are further treated for recovery.

### Example 2

For comparison to prior art processes, production of a bimodal-grade polymer was again carried out repeating the process described in Example 1 except that the transfer from reactor 1 into the hydrocyclone 4 was omitted. The reactor 1 conditions and the polymerization rate were kept the same as in example 1, and reactor 1 was fed continuously with ethylene at a rate of 1.26kgs⁻¹ (10 kpph) and hydrogen at a rate of 3.2gs⁻¹ (25 pph), respectively. The isobutane diluent demand for reactor 1 was 2.33kgs⁻¹ (18.5 kpph). The polymer suspension drawn off from the polymerization reactor 1, comprising about 35% by weight particles of an ethylene homopolymer, was sent directly into the intermediate-pressure flash vessel 12. Isobutane diluent and hexene from the recycle system was introduced via the line 18 to vessel 12 at a flowrate of essentially zero, so as not to dilute further the polymer suspension collected in the bottom of vessel 12, which comprised about 35% by weight of polymer particles. The vessel 12 was at the same pressure as per example 1. The steam flow used in the vessel jacket was kept the same as per example 1. The temperature of the overhead gases were 33°C (92° F), and the temperature in vessel 12 was at 67°C (153° F). The total concentration by weight of H₂ remaining in the suspension collected in vessel 12 was 0.00095% by weight. The flowrates of isobutane diluent and ethylene leaving with the overhead light gas stream were 94.8gs⁻¹ (753 pph) and 34.4gs⁻¹ (273 pph), respectively.

The degassed suspension was introduced into the reactor 2 via line 13 at a flowrate of about 3.53kgs⁻¹ (28 kpph). The loop reactor 2 was kept at the same conditions as for the previous example and was continuously fed with additional ethylene and hexene at a rate of 1.25kgs⁻¹ (10 kpph), and 70gs⁻¹ (556 pph), respectively. A stream of isobutane diluent and hexene was added directly to the reactor 2 at a rate of 0.70kgs⁻¹ (5.5 kpph). The flows and composition of the withdrawn polymer suspension from reactor 2 are the same as in example 1.

Comparing examples 1 and 2, the complementary effect of the hydrocyclone on the light gas removal equipment is shown at the same production rates of a "bimodal" resin (where the efficiency of H₂ removal between the reactors is important). For the first reactor production of approximately 1.25kgs⁻¹ (10 kpph), the %H₂ remaining in liquid transferred to the 2^{nd} reactor was substantially less in the preferred process of example 1 at 0.00058% versus 0.00095% for the process of example 2 (not according to the invention). In addition, the flowrates of isobutane and ethylene in the light gas stream leaving via line 17, which would have to be additionally treated, so as to reuse them, were significantly lower for the process of example 1 versus example 2. These flowrates of isobutane and ethylene were 37.7gs⁻¹ (299 pph) and 13.6gs⁻¹ (108 pph), respectively, for example 1 and 94.8gs⁻¹ (753 pph) and 34.4gs⁻¹ (273 pph), respectively for example 2. Additionally, in example 2 (not according to the invention) the pumps 10 and 11 must provide flow to the reactor 2 of 3.5kgs⁻¹ (28 kpph) versus 2.5kgs⁻¹ (20 kpph) for example 1 (with a lower requisite pump-motor power demand).

A comparison of Examples 1 and 2 shows that the process according to the invention enables the efficient separation of H₂ and ethylene light gases from the polymer particles leaving the first reactor without the excessive loss of diluent and excessive power consumption, while allowing the first reactor to operate in a controlled manner at the preferred <40wgt% solids concentration.

The following numbered paragraphs set out features of some embodiments of the invention:
1. A process for manufacturing an olefin polymer composition comprising the steps of:
   (a) providing at least one olefin for continuous polymerization in a first reaction zone in the presence of a diluent and a catalyst in order to produce a slurry comprising the diluent and solid particles of olefin polymer circulating in the reaction zone,
   (b) withdrawing part of the circulating slurry and sending it into a concentrator wherein the slurry is separated into two streams comprising:
      (1) a polymer lean stream comprising diluent and catalyst and/or polymer; and
      (2) a second stream comprising a concentrated suspension of particles of polymer;
   (c) recycling the lean stream to the first polymerization reaction zone under a controlled flow equal to at least 0.4 times the total flow of the second stream; and
   (d) transferring part of the second stream containing particles of polymer to a second polymerization reactor zone.
2. A process according to paragraph 1 wherein at least part of the second stream is fractionated by a fractionation column prior to entry into the second reactor zone.
3. A process according to paragraph 2 wherein the overhead gases directly leaving the fractionation column contain < 0.01% wt of polymer particles or fines.
4. A process according to paragraph 1 wherein the concentration of hydrogen entering the second reactor zone is reduced to about 80 to about 99 weight percent of the concentration of hydrogen in the slurry withdrawn from the first reactor zone.
5. A process according to paragraph 1 wherein the second stream suspension has a solids concentration between 30 weight percent to about 65 weight percent.
6. A process according to paragraph 5 wherein the second stream suspension has a solids concentration between 50 weight percent to about 60 weight percent.
7. A process according to paragraph 1 wherein from about 1% up to about 20% of the circulating slurry in the first reaction zone is withdrawn and sent to the concentrator.
8. A process according to paragraph 7 wherein from about 1% up to about 5% of the circulating slurry in the first reaction zone is withdrawn and sent to the concentrator.
9. A process according to paragraph 1 wherein the flow of the first stream is controlled to maintain the solids content in the second stream at greater than the solids content of the polymer slurry inside the first polymerization reaction zone.
10. A process according to paragraph 9 wherein the solids content in the second stream is from about 15 weight percent to 30 weight percent greater than the solids content of the polymer slurry inside the first polymerization reaction zone.
11. A process according to paragraph 9, where the slurry is diluted to a solids concentration that is at least 0.1 weight percent lower than the second stream to create a diluted slurry.
12. A process according to paragraph 1 wherein the flow of the first stream is controlled to maintain the catalyst productivity inside the first polymerization zone at 10% greater than when the concentrator vessel is bypassed.
13. A process according to paragraph 1 the slurry sent into the concentrator is continuously withdrawn from the first polymerization zone.
14. A process according to paragraph 1 wherein the concentrator is a hydrocyclone separator.
15. A process according to paragraph 14 wherein the catalyst productivity is at least 10,000 pounds of olefin polymer per pound of catalyst provided.
16. A process according to paragraph 1 wherein the first stream runs at a rate of more than 0.8 times the total flow rate of the second stream.
17. A process according to paragraph 9 wherein the solids content in the second stream is controlled to be at least 20 weight percent greater than the solids content of the polymer slurry inside the first polymerization reaction zone.
18. A process according to paragraph 1 wherein the solids content of the polymer suspension inside the second polymerization zone is greater than the solids content of the polymer slurry inside the first polymerization zone.
19. A process according to paragraph 18, wherein the solids content of the polymer suspension inside the second polymerization zone is at least 10 weight percent greater than the solids content of the polymer slurry inside the first polymerization zone.
20. A process according to paragraph 2 wherein the fractionation column is operating at from about 50 psig to about 300 psig lower than the pressure of the first reaction zone.
21. A process according to paragraph 20 additionally comprising the step of adding a second concentrated polymer suspension having a solids concentration from about 30 weight percent to about 60 weight percent to the second polymerization reactor zone to produce an olefin polymer suspension having particles from both polymer suspensions.
22. A process according to paragraph 1, wherein the second stream is sent to a fractionation column from where a second concentrated polymer suspension having a solids concentration from about 30 weight percent to about 60 weight percent is collected and transferred to a second polymerization zone.
23. A process according to paragraph 20, where the fractionation column is any fractionation device consisting of at least 2 stages and having an overhead condenser.
24. A process according to paragraph 23, where the overhead condenser is a spiral-flow condenser that is directly attached to the top of the fractionation column.
25. A process according to Paragraph 2, where part or all of the degassed slurry collected from the bottom of the fractionation column is pumped to the second polymerization reaction zone using one or more open-impeller centrifugal pumps
26. A process according to Paragraph 25, where the total flow through the centrifugal pumps is controlled via the use of a recirculation line.
27. A process according to Paragraph 25, where the total head pressure produced by the series of at least two pumps is at least 250 psi.
28. A process according to paragraph 1, where the catalyst used for polymerization is a catalyst of the Zeigler type.
29. A process according to paragraph 1, where the catalyst used for polymerization is a catalyst based on chromium.
30. A process according to paragraph 1, where the catalyst used for polymerization is a metallocene catalyst.

## Claims

1. A process for manufacturing an olefin polymer composition comprising the steps of:
(a) providing at least one olefin for continuous polymerization in a first reaction zone in the presence of a diluent and a catalyst such as a catalyst of the Zeigler type, a catalyst based on chromium or a metallocene catalyst in order to produce a slurry comprising the diluent and solid particles of olefin polymer circulating in the reaction zone,
(b) withdrawing part of the circulating slurry and sending it into a concentrator wherein the slurry is separated into two streams comprising:
(1) a polymer lean stream comprising diluent and catalyst and/or polymer; and
(2) a second stream comprising a concentrated suspension of particles of polymer;
(c) recycling the lean stream to the first polymerization reaction zone under a controlled flow equal to at least 0.4 times the total flow of the second stream; and
(d) transferring part of the second stream containing particles of polymer to a second polymerization reactor zone and wherein optionally at least part of the second stream is fractionated by a fractionation column prior to entry into the second reactor zone and wherein preferably the overhead gases directly leaving the fractionation column contain < 0.01 % wt of polymer particles or fines.

2. A process according to claim 1 wherein the concentration of hydrogen entering the second reactor zone is reduced to 80 to 99 weight percent of the concentration of hydrogen in the slurry withdrawn from the first reactor zone.

3. A process according to claim 1 wherein the second stream suspension has a solids concentration between 30 weight percent to 65 weight percent preferably a solids concentration between 50 weight percent to 60 weight percent.

4. A process according to claim 1 wherein from 1% up to 20% of the circulating slurry in the first reaction zone is withdrawn and sent to the concentrator preferably wherein from 1% up to 5% of the circulating slurry in the first reaction zone is withdrawn and sent to the concentrator.

5. A process according to claim 1 wherein the flow of the first stream is controlled to maintain the solids content in the second stream at greater than the solids content of the polymer slurry inside the first polymerization reaction zone for example wherein the solids content in the second stream is from 15 weight percent to 30 weight percent greater than the solids content of the polymer slurry inside the first polymerization reaction zone and where, preferably, the slurry is diluted to a solids concentration that is at least 0.1 weight percent lower than the second stream to create a diluted slurry.

6. A process according to claim 1 wherein the flow of the first stream is controlled to maintain the catalyst productivity inside the first polymerization zone at 10% greater than when the concentrator vessel is bypassed.

7. A process according to claim 1 the slurry sent into the concentrator is continuously withdrawn from the first polymerization zone.

8. A process according to claim 1 wherein the concentrator is a hydrocyclone separator and wherein optionally the catalyst productivity is at least 10,000 kg (pounds) of olefin polymer per kg (pound) of catalyst provided.

9. A process according to claim 1 wherein the first stream runs at a rate of more than 0.8 times the total flow rate of the second stream.

10. A process according to claim 5 wherein the solids content in the second stream is controlled to be at least 20 weight percent greater than the solids content of the polymer slurry inside the first polymerization reaction zone.

11. A process according to claim 1 wherein the solids content of the polymer suspension inside the second polymerization zone is greater than the solids content of the polymer slurry inside the first polymerization zone preferably, wherein the solids content of the polymer suspension inside the second polymerization zone is at least 10 weight percent greater than the solids content of the polymer slurry inside the first polymerization zone.

12. A process according to claim 1 wherein the fractionation column is operating at from 344kPa gauge (50 psig) to 2068kPa gauge (300 psig) lower than the pressure of the first reaction zone and optionally additionally comprising the step of adding a second concentrated polymer suspension having a solids concentration from 30 weight percent to 60 weight percent to the second polymerization reactor zone to produce an olefin polymer suspension having particles from both polymer suspensions.

13. A process according to claim 1, wherein the second stream is sent to a fractionation column from where a second concentrated polymer suspension having a solids concentration from 30 weight percent to 60 weight percent is collected and transferred to a second polymerization zone.

14. A process according to claim 13, where the fractionation column is any fractionation device consisting of at least 2 stages and having an overhead condenser such as a spiral-flow condenser that is directly attached to the top of the fractionation column.

15. A process according to claim 1, where part or all of the degassed slurry collected from the bottom of the fractionation column is pumped to the second polymerization reaction zone using one or more open-impeller centrifugal pumps, wherein the total flow through the centrifugal pumps is preferably controlled via the use of a recirculation line for example a process where the total head pressure produced by the series of at least two pumps is at least 1724kPa (250 psi).
